# EUROPÄISCHE PATENTANMELDUNG

(11) **EP 2 631 681 A2**
(43) Veröffentlichungstag der Anmeldung: **28.08.2013**
(21) Anmeldenummer: 13152121.3
(22) Anmeldetag: 22.01.2013
(51) Int. Cl.: G01V 8/20

(54) **Lichtvorhang**

(30) Priorität: 21.02.2012 DE 102012101369
(71) Anmelder: Leuze electronic GmbH + Co KG, 73277 Owen/Teck (DE)
(72) Erfinder: Schönleitner, Arnold, 3002 Purkersdorf (AT); Schedlberger, Robert, 4283 Bad Zell (AT)
(74) Vertreter: Ruckh, Rainer Gerhard

(57) **Zusammenfassung**

Der erfindungsgemäße Lichtvorhang (1) dient zur Erfassung von Objekten innerhalb eines Überwachungsbereichs und umfasst eine Anordnung von Lichtstrahlen (4) emittierenden Sendern (5), eine Anordnung von Lichtstrahlen (4) empfangenden Empfängern (6) und eine Auswerteeinheit, in welcher in Abhängigkeit von Empfangssignalen an den Ausgängen von Empfängern (6) ein Objektfeststellungssignal generiert wird. Die Sender (5) und die Empfänger (6) sind über Ausgangsleitungen einer Anordnung von Rechnereinheiten angesteuert, wobei über diese die Zeitpunkte der Aktivierung einzelner Sender (5) und Empfänger (6) frei wählbar sind.

## Beschreibung

Die Erfindung betrifft einen Lichtvorhang gemäß dem Oberbegriff des Anspruchs 1.

Derartige Lichtvorhänge dienen allgemein zur Erfassung von Objekten in einem Überwachungsbereich und umfassen eine Sendereinheit mit einer Anordnung von Lichtstrahlen emittierenden Sender und eine Empfängereinheit mit einer Anordnung von Lichtstrahlen empfangenden Empfängern. Die Sender-und Empfängereinheit sind an gegenüberliegenden Rändern des Überwachungsbereichs so angeordnet, dass bei freiem Überwachungsbereich die Lichtstrahlen eines Senders auf einen, zugeordneten gegenüberliegenden Empfänger treffen. Dieses Sender-/Empfängerpaar bildet eine Strahlachse des Lichtvorhangs. Die einzelnen Strahlachsen des Lichtvorhangs werden zyklisch einzeln nacheinander aktiviert. Hierzu ist in der Sendereinheit eine Steuereinheit integriert, die ein Schieberegister so ansteuert, dass damit die Sender zyklisch einzeln nacheinander aktiviert werden. In der Empfängereinheit ist eine Auswerteeinheit integriert, die ein weiteres Schieberegister so ansteuert, dass damit die Empfänger einzeln nacheinander aktiviert werden. Die Aktivierung der Sender und Empfänger wird auf optischem Wege oder elektrisch synchronisiert. Durch diese Synchronisation werden die einzelnen Sender-/Empfängerpaare des Lichtvorhangs zyklisch einzeln nacheinander aktiviert.

Zur Generierung eines Objektfeststellungssignals in Form eines binären Schaltsignals erfolgt in der Auswerteeinheit mittels eines oder mehrerer Schwellwerte eine Amplitudenbewertung der Empfangssignale. Innerhalb eines Zykluses, bei welchem alle Sender-/Empfängerpaare nacheinander aktiviert werden, wird geprüft, ob wenigstens die Lichtstrahlen einer Strahlachse unterbrochen sind. Ist dies der Fall, wird von der Auswerteeinheit als Schaltsignalzustand eine Objektmeldung ausgegeben. Ist keine der Strahlachsen unterbrochen, wird als Schaltsignalzustand ein freier Überwachungsbereich gemeldet.

Nachteilig bei derartigen Lichtvorhängen ist die relativ kleine Wiederholrate, mit der das Schaltsignal generiert wird, da für jede neue Generierung des Schaltsignals ein kompletter, fest vorgegebener Durchlauf aller Strahlachsen des Lichtvorhangs vorgenommen werden muss. Die Einzelaktivierung aller Sender-/Empfängerpaare innerhalb eines Zykluses kann prinzipiell zwar durch eine Ausblendung vorgegebener Strahlachsen geändert, das heißt diese Strahlachsen werden nicht zur Auswertung und Generierung des Objektfeststellungsignals herangezogen. Diese Variation führt jedoch zu keiner Erhöhung der Wiederholrate der Generierung des Schaltsignals.

Der Erfindung liegt die Aufgabe zugrunde, einen Lichtvorhang bereitzustellen, welcher bei geringem konstruktivem Aufwand eine erhöhte Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße Lichtvorhang dient zur Erfassung von Objekten innerhalb eines Überwachungsbereichs und umfasst eine Anordnung von Lichtstrahlen emittierenden Sendern, eine Anordnung von Lichtstrahlen empfangenden Empfängern und eine Auswerteeinheit, in welcher in Abhängigkeit von Empfangssignalen an den Ausgängen von Empfängern ein Objektfeststellungssignal generiert wird. Die Sender und die Empfänger sind über Ausgangsleitungen einer Anordnung von Rechnereinheiten angesteuert, wobei über diese die Zeitpunkte der Aktivierung einzelner Sender und Empfänger frei wählbar sind. Bei dem erfindungsgemäßen Lichtvorhang kann generell für jeden einzelnen Messzyklus, innerhalb dessen ein Objektfeststellungssignal generiert werden, die Aktivierung von Sendern und Empfängern neu vorgegeben werden.

Ein wesentlicher Vorteil des erfindungsgemäßen Lichtvorhangs besteht darin, dass innerhalb jedes Messzyklus des Lichtvorhangs die Anzahl und auch die Reihenfolge der aktivierten Sender und Empfänger entsprechend den jeweiligen Applikations-Anforderungen flexibel variiert werden kann.

Generell ist es bei dem erfindungsgemäßen Lichtvorhang möglich, auch mehrere Sender und Empfänger gleichzeitig zu aktivieren, wodurch die Wiederholrate für die Generierung des Objektfeststellungsignals erheblich gesteigert werden kann.

Besonders vorteilhaft können insbesondere zur Erfassung bestimmter Objektstrukturen innerhalb eines Teilausschnitts des Überwachungsbereichs nur ein geringer Teil der Sender und auch ein geringer Teil der Empfänger pro Messzyklus aktiviert werden. Dadurch kann die Zykluszeit des Messzyklus gering gehalten und so die Wiederholrate, mit der das Objektsfeststellungssignal generiert wird, erheblich gesteigert werden.

Gemäß einer vorteilhaften Ausgestaltung können die aktivierten Sender und Empfänger auch einen sich zeitlich verändernden Bereich bilden, der bei Durchfahren eines Objekts durch den Überwachungsbereich mit diesem mitfährt. Dies stellt eine besonders exakte Anpassung von aktivierten Sender-/Empfängerbereichen an die jeweilige Objektdetektion dar.

Gemäß einer vorteilhaften Variante können auch auszublendende Bereiche im Überwachungsbereich einfach dadurch vorgegeben werden, dass die diese Bereiche abdeckenden Sender und Empfänger nicht aktiviert werden.

Gemäß einer weiteren vorteilhaften Variante kann beispielsweise bei der Verfolgung von Objekten, die ihre Bewegungsrichtung ändern auch die Reihenfolge der Aktivierung der Sender und Empfänger hierzu angepasst werden.

Schließlich können für den Fall, dass die Lichtkegel der Lichtstrahlen auf mehrere Empfänger treffen, durch selektives Aktivieren einer Teilmenge dieser Empfänger Diagonal- oder Kreuzstrahlengänge für die Strahlachsen des Lichtvorhangs erzeugt werden, um hiermit gegebenenfalls auch komplexere Objektstrukturen erkennen zu können.

Weiterhin können bei Mehrfachanordnungen von Lichtvorhängen mit einer gezielten Abfolge der Aktivierung von Sendern und Empfängern gegenseitige optische Beeinflussungen der Lichtvorhänge vermieden werden. Hierzu werden jeweils nur die Sender- und Empfängergruppen verschiedener Lichtvorhänge gleichzeitig aktiviert, für welche aufgrund ihrer geometrischen Anordnung keine Gefahr einer gegenseitigen Beeinflussung besteht. Da somit der Betrieb dieser Lichtvorhänge dahingehend optimiert ist, dass ohne Gefahr einer gegenseitigen Beeinflussung Sender und Empfänger der unterschiedlichen Lichtvorhänge auch gleichzeitig aktiviert werden können, werden für diese Lichtvorhänge bei störungsfreiem Betrieb hohe Wiederholraten der Generierung der Objektfeststellungsignalen realisiert, das heißt schnelle Objekterkennungen ermöglicht.

Gemäß einer besonders vorteilhaften konstruktiven Ausgestaltung wird die Aktivierung von Sendern und Empfängern über eine zentrale Steuereinheit gesteuert, wobei vorteilhaft die zentrale Steuereinheit die Auswerteeinheit bildet, in welcher das Objektfeststellungsignal generiert wird.

Weiterhin weist der Lichtvorhang eine Sendereinheit mit einer Anzahl von Sendern auf, welchen eine Anordnung von Microcontrollern zugeordnet ist, wobei die Sender an Portleitungen der Microcontrollern angeschlossen sind. Der Lichtvorhang weist weiterhin eine Empfängereinheit mit einer Anzahl von Empfängern auf, welchen eine Anordnung von Microcontrollern zugeordnet ist, wobei die Empfänger an Portleitungen der Microcontrollern angeschlossen sind. Der Sendereinheit und Empfängereinheit sind über einen digitalen Bus an die zentrale Steuereinheit angeschlossen.

Vorteilhaft bilden jeweils ein Sender der Sendereinheit und ein dem Sender gegenüberliegender Empfänger der Empfängereinheit, auf welchen die Lichtstrahlen des zugeordneten Senders bei freiem Überwachungsbereich treffen, ein Sender-/Empfängerpaar. Einzelne Sender-/Empfängerpaare werden pro Messzyklus je nach den aktuellen Anforderungen über die zentrale Steuereinheit aktiviert.

Die Aktivierung der einzelnen Sender-/Empfängerpaare erfolgt über die zentrale Steuereinheit, die die Portleitung der Microcontollern der den jeweils zugeordneten Sender-/Empfängerpaare aktivieren. Hierzu sendet die zentrale Steuereinheit über den digitalen Bus geeignete Signale.

Vorteilhaft werden über den digitalen Bus Telegramme gesendet, wobei spezielle Byte-Werte der Telegramme zur Ansteuerung der Sender und Empfänger dienen.

Damit können zur Aktivierung der einzelnen Sender- und Empfänger die bereits vorhandenen Kommunikationsstrukturen des digitalen Busses genutzt werden, das heißt es müssen hierfür keine zusätzlichen konstruktiven Maßnahmen vorgesehen sein.

Prinzipiell können in den einzelnen Microcontrollern bei einem Konfigurationsvorgang für die einzelnen Messzyklen die Portzustände der zu aktivierenden Portleitungen hinterlegt sein. Die Generierung der Portzustände, das heißt die Vorgabe der Portleitungen, die in einem Messzyklus zu aktivieren ist, erfolgt dann über die zentrale Steuereinheit.

Dies bedingt jedoch einen relativ hohen Aufwand für die Datenkommunikation und weiteren einen hohen Speicherplatzbedarf in den einzelnen Microcontrollern.

Vorteilhaft werden daher in einer alternativen Ausgestaltung der Erfindung in den Microcontrollern der Sender- und Empfängereinheit Ablauflisten gespeichert, welche die Aktivierungszeiten der Sender und Empfänger innerhalb eines Messzykluses enthalten. Zur Aktivierung vorgebbarer Sender oder Empfänger werden von der zentralen Steuereinheit an die zugeordneten Microcontroller Triggersignale übertragen, wobei die Triggersignale Referenzierungen auf die dort gespeicherten Ablauflisten enthalten. Die Referenzierungen sind in Form von Zählimpulsen, die auf einen Startimpuls folgen, ausgebildet. In einem Microcontroller wird anhand der im Triggersignal enthaltenen Referenzierung auf die jeweilige Ablaufliste die Portleitung des zu aktivierenden Senders oder Empfängers berechnet. Die Ablauflisten werden während eines Konfigurationsvorgangs in die Microcontroller der Sender- und Empfängereinheit eingelesen.

Durch diese Methode wird die Aktivierung der einzelnen Sender und Empfänger erheblich vereinfacht. Durch das von der zentralen Steuereinheit empfangene Triggersignal kann jeder Microcontroller durch Rückgriff auf die Ablaufliste in einfacher Weise errechnen, welche seiner Portleitungen zu bestimmten Zeiten zu aktivieren sind. Insbesondere können durch eine geeignete Ausbildung der Ablaufliste Zeitbereiche, in welchen bestimmte Portleitungen von Microcontrollern nicht aktiviert werden müssen, zusammengefasst werden, was zu einer erheblichen Verkleinerung der Ablaufliste führt.

Die Erfindung wird im Folgenden anhand der Zeichnungen erläutert. Es zeigen:
- Figur 1:: Schematische Darstellung eines Ausführungsbeispiels des erfindungsgemäßen Lichtvorhangs.
- Figur 2a-c:: Zeitliche Abfolge der Detektion eines sich durch den Überwachungsbereich des Lichtvorhangs bewegenden Objekts.

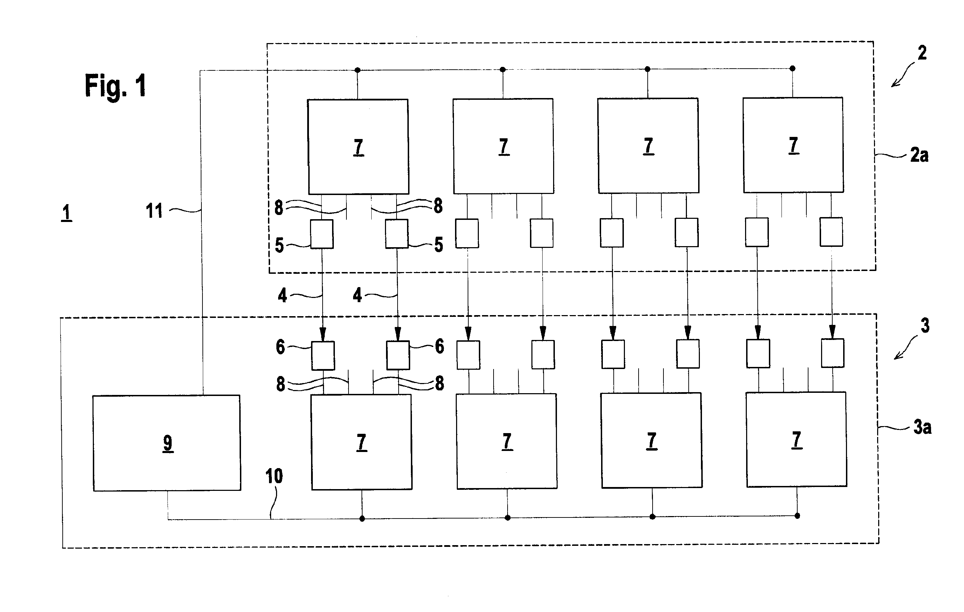

Figur 1 zeigt ein Ausführungsbeispiel des erfindungsgemäßen Lichtvorhangs 1. Der Lichtvorhang 1 umfasst eine Sendereinheit 2 mit einem ersten Gehäuse 2a und eine Empfängereinheit 3 mit einem zweiten Gehäuse 3a. Die Sendereinheit 2 und Empfängereinheit 3 sind an gegenüberliegenden Rändern eines Überwachungsbereichs angeordnet, innerhalb dessen mit dem Lichtvorhang 1 Objekte erfasst werden können.

Im dem Gehäuse 2a der Sendereinheit 2 befindet sich eine Linearanordnung von Lichtstrahlen 4 emittierenden Sendern 5. In dem Gehäuse 3a der Empfängereinheit 3 befindet sich eine der Zahl der Sender 5 entsprechende Anzahl von Lichtstrahlen 4 empfangenden Empfängern 6, die ebenfalls eine Linearanordnung bilden. Die Sender 5 sind von Leuchtdioden, Laserdioden oder dergleichen gebildet. Die Empfänger 6 sind von Photodioden gebildet. Zur Strahlformung der Lichtstrahlen 4 können den Sendern 5 nicht dargestellte Sendeoptiken nachgeordnet sein. Zur Fokussierung der Lichtstrahlen 4 auf die Empfänger 6 können diese nicht dargestellte Empfangsoptiken vorgeordnet sein.

Jedem Sender 5 ist, wie aus Figur 1 ersichtlich, ein gegenüberliegend angeordneter Empfänger 6 so zugeordnet, dass bei freiem Überwachungsbereich die Lichtstrahlen 4 dieses Senders 5 auf diesen zugeordneten Empfänger 6 treffen. Damit bilden diese Sender 5 und Empfänger 6 ein Sender-/Empfängerpaar und eine sogenannte Strahlachse des Lichtvorhangs 1 aus. Im vorliegenden Fall sind acht derartige Strahlachsen vorgesehen. Die Anzahl der Strahlachsen bei dem Lichtvorhang 1 kann variieren. Auch sind Anforderungen möglich, bei dem die Lichtstrahlen 4 eines Senders 5 auf mehrere Empfänger 6 treffen.

In der Sendereinheit 2 befindet sich eine Anordnung von Microcontrollern 7. Die einzelnen Sender 5 sind an bestimmte Portleitungen 8 der Microcontroller 7 angeschlossen. Jeder Microcontroller 7 kann eine Vielzahl von Portleitungen 8 aufweisen. Im vorliegenden Fall sind an jedem Microcontroller 7 zwei Sender 5 über jeweils eine separate Portleitung 8 angeschlossen.

In der Empfängereinheit 3 befindet sich ebenfalls eine Anordnung von Microcontrollern 7. Die einzelnen Empfänger 6 sind an bestimmte Portleitungen 8 der Microcontroller 7 angeschlossen. Im vorliegenden Fall sind an jedem Microcontroller 7 zwei Empfänger 6 über jeweils eine separate Portleitung 8 angeschlossen.

In der Empfängereinheit 3 befindet sich weiter eine zentrale Steuereinheit 9, die von einem weiteren Microcontroller gebildet sein kann. Die zentrale Steuereinheit 9 ist über Busleitungen 10 eines digitalen Busses mit den Microcontroller 7 der Empfängereinheit 3 verbunden. Weiterhin ist die zentrale Steuereinheit 9 über Busleitungen 11 des digitalen Busses mit den Microcontrollern 7 der Sendereinheit 2 verbunden. Die Busleitungen 10, 11 sind Bestandteil nur eines Busses.

Die zentrale Steuereinheit 9 dient zum einen zur Ansteuerung und Aktivierung der einzelnen Sender 5 und Empfänger 6. Weiterhin bildet die zentrale Steuereinheit 9 eine Auswerteeinheit, in welcher in Abhängigkeit der Empfangssignale ein Objektfeststellungssignal generiert wird. Vorzugsweise erfolgt in der Auswerteeinheit eine Schwellwertbewertung der Empfangssignale der Empfänger 6, wodurch ermittelt wird, ob die Lichtstrahlen 4 der jeweiligen Strahlachsen durch einen Objekteingriff unterbrochen sind oder nicht.

Über die zentrale Steuereinheit 9 werden in einzelnen aufeinanderfolgenden Messzyklen jeweils Sender 5 und Empfänger 6 des Lichtvorhans 1 aktiviert, wobei die zentrale Steuereinheit 9 die einzelnen Sender 5 und Empfänger 6 hinsichtlich Position und Anzahl frei auswählen kann. Innerhalb eines jeden Messzykluses wird für die aktivierten Sender 5 und Empfänger 6 jeweils ein Objektfeststellungsignal generiert.

Die in den einzelnen Messzyklen zu aktivierenden Sender 5 und Empfänger 6 werden in einem Konfigurationsvorgang festgelegt. Hierzu werden, vorzugsweise über die zentrale Steuereinheit 9, in die einzelnen Microcontrollern 7 der Sender- und Empfängereinheit 2, 3, Ablauflisten übertragen und dort abgespeichert. Die Ablauflisten enthalten als Indizes die einzelnen zu aktivierenden Sender 5 und Empfänger 6 sowie die Zeitpunkte der Aktivierung innerhalb des Messzykluses, wodurch die Reihenfolge der Aktivierung der Sender 5 und Empfänger 6 innerhalb des jeweiligen Messzykluses definiert ist.

Während des auf den Konfigurationsvorgang folgenden Arbeitsbetriebs des Lichtvorhangs 1 sendet die zentrale Steuereinheit 9 an die Microcontrollern 7 Triggersignale. Diese Triggersignale werden als Bitfolgen innerhalb von Telegrammen, die über den digitalen Bus gesendet werden, übertragen. Die Microcontroller 7 der Sender- und Empfängereinheit 2, 3 sind dabei parallel an den digitalen Bus angeschlossen, so dass alle Microcontroller 7 die Telegramme der zentralen Steuereinheit 9 empfangen.

Die Triggersignale enthalten Referenzierungen auf bestimmte Indizes in den Ablauflisten, die in den Microcontrollern 7 gespeichert sind. Im vorliegenden Fall sind die Referenzierungen in Form von auf einem Startimpuls folgenden Zählimpulsen ausgebildet. Erhält ein Microcontroller 7 ein solches Triggersignal wird in diesem anhand des referenzierten Index der jeweils zu aktivierende Sender 5 beziehungsweise der zu aktivierende Empfänger 6 berechnet und der Aktivierungszeitpunkt aus der Ablaufliste entnommen. Auf diese Weise sind die in einem Messzyklus zu aktivierenden Sender 5 und Empfänger 6 aktiviert.

Im vorliegenden Fall werden immer die Sender 5 und Empfänger 6 eines Sender-/Empfängerpaares zeitgleich aktiviert, so dass dann mit dieser Strahlachse eine Objektdetektion durchgeführt werden kann.

Im einfachsten Fall werden innerhalb eines Messzykluses alle Sender-/Empfängerpaare, das heißt alle Strahlachsen des Lichtvorhangs 1 innerhalb eines Messzykluses einzeln nacheinander aktiviert. In jedem Messzyklus wird geprüft, ob für wenigstens eine Strahlachse ein Objekteingriff, das heißt eine Unterbrechung der Lichtstrahlen 4 dieser Strahlachse vorliegt. Ist dies der Fall, wird als Objektfeststellungsignal eine Objektmeldung ausgegeben. Liegt für keine der Strahlachsen eine Unterbrechung der Lichtstrahlen 4 vor, wird als Objektfeststellungssignal ein freier Überwachungsbereich gemeldet.

Die Aktivierung aufeinanderfolgender Sender-/Empfängerpaare erfolgt mit einer bestimmten Taktrate, das heißt die Taktzeit zwischen der Aktivierung zweier aufeinanderfolgender Sender-/Empfängerpaare ist konstant. Da im vorliegenden Beispiel innerhalb eines Messzykluses alle acht Sender-/Empfängerpaare aktiviert werden, beträgt die Dauer des Messzykluses das Achtfache der Taktzeit.

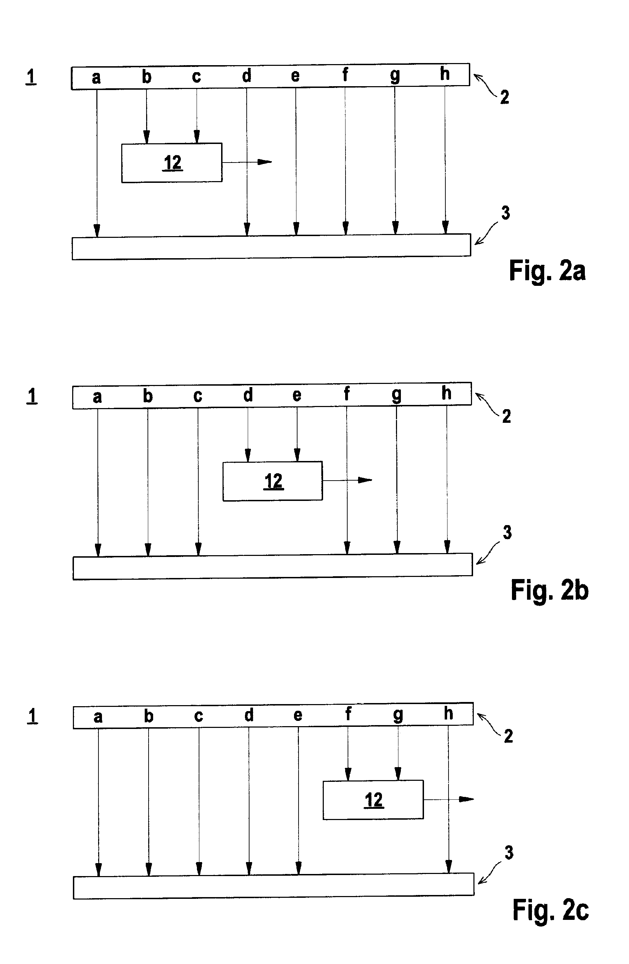

Die Figuren 2a bis 2c zeigen ein weiteres Anwendungsbeispiel für den Lichtvorhang 1 gemäß Figur 1. In diesem Fall erfolgt mit dem Lichtvorhang 1 eine Objektverfolgung derart, dass ein Gegenstand 12 mit einer Geschwindigkeit v durch den Überwachungsbereich bewegt wird, und dabei mit dem Lichtvorhang 1 fortlaufend erfasst wird. Die Figuren 2a bis 2c zeigen dabei den Gegenstand 12 zu unterschiedlichen Zeiten und in unterschiedlichen Positionen innerhalb des Überwachungsbereichs. Die einzelnen Strahlachsen des Lichtvorhangs 1 sind im vorliegenden Fall mit den Buchstaben a bis h durchnummeriert. Wie aus den Figuren 2a bis 2c ersichtlich, weist der Gegenstand 12 eine Größe derart auf, dass durch diesen maximal zwei Strahlachsen unterbrochen sind. Daher werden über die zentrale Steuereinheit 9 in jedem Messzyklus nicht alle Strahlachsen, das heißt deren Sender-/Empfängerpaare aktiviert. Vielmehr werden pro Messzyklus nur vier Strahlachsen aktiviert, während die restlichen vier Strahlachsen deaktiviert sind.

Nach Eintritt des Gegenstands 12 in den Überwachungsbereich sind nur die ersten vier Strahlachsen a bis d aktiviert (Figur 2a). Mit den Strahlen b, c wird der Gegenstand 12 erfasst, während die weiter aktivierten Strahlachsen a, d nicht unterbrochen sind. Durch Auswertung der Empfangssignale der Empfänger 6 der Strahlachsen a bis d kann die Position und Größe des Gegenstands 12 kontrolliert werden. Vorzugsweise werden innerhalb eines Messzykluses die Strahlachsen in aufsteigender Reihenfolge a, b, c, d aktiviert.

Das Fenster der vier aktivierten Strahlachsen wandert mit dem sich durch den Überwachungsbereich bewegenden Gegenstand 12 mit. Demzufolge sind, wie Figur 2b zeigt, nur die Strahlachsen c, d, e, f aktiviert, wenn sich der Gegenstand 12 in der Mitte des Überwachungsbereichs befindet. Weiterhin sind nur die Strahlachsen e, f, g, h aktiviert, wenn sich, wie in Figur 2c dargestellt, der Gegenstand 12 in Richtung des Ausgangs des Überwachungsbereichs bewegt hat.

Da in jedem Messzyklus immer nur vier Strahlachsen nacheinander aktiviert werden und nicht, wie im Beispiel von Figur 1, alle acht Strahlachsen, ist die Zykluszeit eines Messzykluses halbiert, das heißt das Objektfeststellungssignal wird mit der doppelten Wiederholrate generiert.

### Bezugszeichenliste

- (1): Lichtvorhang
- (2): Sendereinheit
- (2a): Gehäuse
- (3): Empfängereinheit
- (3a): Gehäuse
- (4): Lichtstrahlen
- (5): Sender
- (6): Empfänger
- (7): Microcontroller
- (8): Portleitung
- (9): zentrale Steuereinheit
- (10): Busleitung
- (11): Busleitung
- (12): Gegenstand

## Patentansprüche

1. Lichtvorhang (1) zur Erfassung von Objekten innerhalb eines Überwachungsbereichs, mit einer Anordnung von Lichtstrahlen (4) emittierenden Sendern (5) mit einer Anordnung von Lichtstrahlen (4) empfangenden Empfängern (6) und mit einer Auswerteeinheit, in welcher in Abhängigkeit von Empfangssignalen an den Ausgängen von Empfängern (6) ein Objektfeststellungssignal generiert wird, **dadurch gekennzeichnet, dass** die Sender (5) und die Empfänger (6) über Ausgangsleitungen einer Anordnung von Rechnereinheiten angesteuert sind, wobei über diese die Zeitpunkte der Aktivierung einzelner Sender (5) und Empfänger (6) frei wählbar sind.

2. Lichtvorhang nach Anspruch 1, **dadurch gekennzeichnet, dass** die Generierung des Objektfeststellungssignals jeweils am Ende eines Messzykluses erfolgt, wobei für jeden Messzyklus die Anzahl der aktivierten Sender (5) und Empfänger (6) und die Zeitpunkte deren Aktivierung neu vorgebbar sind.

3. Lichtvorhang nach einem der Ansprüche 1 oder 2, **dadurch gekennzeichnet, dass** die Aktivierung von Sendern (5) und Empfängern (6) über eine zentrale Steuereinheit (9) gesteuert wird.

4. Lichtvorhang nach Anspruch 3, **dadurch gekennzeichnet, dass** die zentrale Steuereinheit (9) die Auswerteeinheit bildet, in welcher das Objektfeststellungsignal generiert wird.

5. Lichtvorhang nach einem der Ansprüche 1 bis 4, **dadurch gekennzeichnet, dass** dieser eine Sendereinheit (2) mit einer Anzahl von Sendern (5) aufweist, welchen eine Anordnung von Microcontrollern (7) zugeordnet ist, wobei die Sender (5) an Portleitungen (8) der Microcontrollern (7) angeschlossen sind.

6. Lichtvorhang nach einem der Ansprüche 1 bis 5, **dadurch gekennzeichnet, dass** dieser eine Empfängereinheit (3) mit einer Anzahl von Empfängern (6) aufweist, welchen eine Anordnung von Microcontrollern (7) zugeordnet ist, wobei die Empfänger (6) an Portleitungen (8) der Microcontrollern (7) angeschlossen sind.

7. Lichtvorhang nach Anspruch 6, **dadurch gekennzeichnet, dass** die Microcontroller (7) der Sendereinheit (2) und Empfängereinheit (3) über einen digitalen Bus an die zentrale Steuereinheit (9) angeschlossen sind.

8. Lichtvorhang nach Anspruch 7, **dadurch gekennzeichnet, dass** über den digitalen Bus Telegramme gesendet werden, wobei spezielle Byte-Werte der Telegramme zur Ansteuerung der Sender (5) und Empfänger (6) dienen.

9. Lichtvorhang nach einem der Ansprüche 7 oder 8, **dadurch gekennzeichnet, dass** in den Microcontrollern (7) der Sender- und Empfängereinheit (2, 3) Ablauflisten gespeichert sind, welche die Aktivierungszeiten der Sender (5) und Empfänger (6) innerhalb eines Messzykluses enthalten, und dass zur Aktivierung vorgebbarer Sender (5) oder Empfänger (6) von der zentralen Steuereinheit Triggersignale an die zugeordneten Microcontrollern (7) übertragen werden, wobei die Triggersignale Referenzierungen auf die dort gespeicherten Ablauflisten enthalten.

10. Lichtvorhang nach Anspruch 9, **dadurch gekennzeichnet, dass** in einem Microcontroller (7) anhand der im Triggersignal enthaltenen Referenzierung auf die jeweilige Ablaufliste die Portleitung (8) des zu aktivierenden Senders (5) oder Empfängers (6) berechnet wird.

11. Lichtvorhang nach einem der Ansprüche 9 oder 10, **dadurch gekennzeichnet, dass** die Ablauflisten während eines Konfigurationsvorgangs in die Microcontroller (7) der Sender- und Empfängereinheit (2, 3) eingelesen werden.
